# EUROPÄISCHE PATENTANMELDUNG

(11) **EP 4 360 990 A1**
(43) Veröffentlichungstag der Anmeldung: **01.05.2024**
(21) Anmeldenummer: 22204687.2
(22) Anmeldetag: 31.10.2022
(51) Int. Cl.: B61L 25/02, B61L 15/00, E01H 5/06, B60R 19/54, B61F 19/08, B61L 3/12

(54) **VERFAHREN ZUM SCHNEERÄUMEN ENTLANG EINER FAHRSTRECKE EINER EISENBAHNTECHNISCHEN ANLAGE UND SCHIENENFAHRZEUG**

(71) Anmelder: Siemens Mobility GmbH, 81739 München (DE)
(72) Erfinder: Bischoff, Steffen, 38302 Wolfenbüttel (DE); Böckelken, Marc-Oliver, 38104 Braunschweig (DE); Holburg, Kai, 38229 Salzgitter (DE); Neugebauer, Karl, 38104 Braunschweig (DE); Reinbothe, Christoph, 15366 Hoppegarten (DE)
(74) Vertreter: Siemens Patent Attorneys

(57) **Zusammenfassung**

Die Erfindung betrifft ein Verfahren zum Schneeräumen entlang einer Fahrstrecke (3) einer eisenbahntechnischen Anlage (1) mittels eines Schienenfahrzeugs (2), das wenigstens ein Schneeräummittel (5) umfasst, wobei wenigstens ein Streckenelement (4), insbesondere eine Balise, ein Achszähler oder ein Weichenantrieb, an der Fahrstrecke (3) angeordnet ist und wobei das Verfahren die folgenden Schritte umfasst:
- Ermitteln einer aktuellen Position des Schienenfahrzeugs (2),
- Ermitteln eines Abstands zwischen der aktuellen Position des Schienenfahrzeugs (2) und dem wenigstens einen Streckenelement (4) mit Hilfe von digitalen Informationsdaten (8), die wenigstens eine Position des Streckenelements (4) und wenigstens einen Verlauf der Fahrstrecke (3) umfassen,
- Ausgeben wenigstens eines Signals (15), wenn der Abstand wenigstens einen vorbestimmten Grenzwert unterschreitet.

Die erfindungsgemäße Lösung hat den Vorteil, dass Beschädigungen an Streckenelementen (4) beim Schneeräumen auf einfache Weise vermieden werden.

Die Erfindung betrifft auch ein Schienenfahrzeug.

## Beschreibung

Die Erfindung betrifft ein Verfahren zum Schneeräumen entlang einer Fahrstrecke einer eisenbahntechnischen Anlage mittels eines Schienenfahrzeugs, das wenigstens ein Schneeräummittel umfasst, wobei wenigstens ein Streckenelement, insbesondere eine Balise, ein Achszähler oder ein Weichenantrieb, an der Fahrstrecke angeordnet ist.

Die Erfindung betrifft außerdem ein Schienenfahrzeug mit wenigstens einem Schneeräummittel, wobei das Schienenfahrzeug zum Schneeräumen mittels des Schneeräummittels entlang einer Fahrstrecke einer eisenbahntechnischen Anlage ausgebildet ist, wobei wenigstens ein Streckenelement, insbesondere eine Balise, ein Achszähler oder ein Weichenantrieb, an der Fahrstrecke angeordnet ist.

Wenn Schnee die Fahrstrecken einer eisenbahntechnischen Anlage zudeckt, muss dieser beseitigt werden, um den planmäßigen Fahrbetrieb aufrechtzuerhalten. Hierzu werden üblicherweise Schienenfahrzeuge verwendet, die wenigstens ein Schneeräummittel, beispielsweise einen oder mehrere Schneepflüge oder Schneeschilde, umfassen. Alternativ können auch an Lokomotiven oder Zügen des normalen Fahrbetriebs solche Schneeräummittel installiert sein, die den Schnee im Betrieb von der Fahrstrecke beseitigen. Da die entlang der Fahrstrecke installierten Streckenelemente häufig durch den Schnee vollständig bedeckt und daher für den Fahrer des zum Räumen eingesetzten Schienenfahrzeugs nicht erkennbar sind, kann es zu problematischen Beschädigungen dieser Streckenelemente kommen. Solche Beschädigungen können zu starken Einschränkungen im Fahrbetrieb und zu hohen Kosten führen. Eine Orientierung in der Schneelandschaft ist sehr schwer, da auch vorhandene optische Markierungen häufig durch den Schnee nicht zu sehen sind.

Es ist daher die Aufgabe der vorliegenden Erfindung, ein Verfahren und ein Schienenfahrzeug der eingangs genannten Art bereitzustellen, durch die das Schneeräumen verbessert werden kann und Beschädigungen an den Streckenelementen vermieden werden.

Erfindungsgemäß wird die Aufgabe gelöst durch ein Verfahren zum Schneeräumen entlang einer Fahrstrecke einer eisenbahntechnischen Anlage mittels eines Schienenfahrzeugs, das wenigstens ein Schneeräummittel umfasst, wobei wenigstens ein Streckenelement, insbesondere eine Balise, ein Achszähler oder ein Weichenantrieb, an der Fahrstrecke angeordnet ist und wobei das Verfahren die folgenden Schritte umfasst:
- Ermitteln einer aktuellen Position des Schienenfahrzeugs,
- Ermitteln eines Abstands zwischen der aktuellen Position des Schienenfahrzeugs und dem wenigstens einen Streckenelement mit Hilfe von digitalen Informationsdaten, die wenigstens eine Position des Streckenelements umfassen,
- Ausgeben wenigstens eines Signals, wenn der Abstand wenigstens einen vorbestimmten Grenzwert unterschreitet.

Weiterhin wird die Aufgabe erfindungsgemäß gelöst durch ein Schienenfahrzeug mit wenigstens einem Schneeräummittel, wobei das Schienenfahrzeug zum Schneeräumen mittels des Schneeräummittels entlang einer Fahrstrecke einer eisenbahntechnischen Anlage ausgebildet ist, wobei wenigstens ein Streckenelement, insbesondere eine Balise, ein Achszähler oder ein Weichenantrieb, an der Fahrstrecke angeordnet ist, und das Schienenfahrzeug ferner ausgebildet ist,
eine aktuelle Position des Schienenfahrzeugs zu ermitteln, einen Abstand zwischen der aktuellen Position des Schienenfahrzeugs und dem wenigstens einen Streckenelement mit Hilfe von digitalen Informationsdaten, die wenigstens eine Position des Streckenelements umfassen, zu ermitteln, und wenigstens ein Signal auszugeben, wenn der Abstand wenigstens einen vorbestimmten Grenzwert unterschreitet.

Die erfindungsgemäße Lösung hat den Vorteil, dass sie einfach zu implementieren ist und einen effektiven Schutz für die Streckenelemente der eisenbahntechnischen Anlage bietet.

Bei dem erfindungsgemäßen Verfahren wird zunächst eine aktuelle Position des Schienenfahrzeugs ermittelt. Dies kann beispielsweise durch das Schienenfahrzeug selbst oder auch durch ein mobiles Endgerät im Schienenfahrzeug geschehen. Das Schienenfahrzeug kann hierfür beispielsweise eine Ortungseinrichtung, die beispielsweise eine Satellitennavigationseinrichtung (GNSS - Global Navigation Satellite System) oder eine Odometrie umfassen, mit der die aktuelle Position des Schienenfahrzeugs jederzeit ermittelbar ist. Das mobile Endgerät kann beispielsweise ein Smartphone, ein Tablet, ein Laptop oder ähnliches sein, die ebenfalls Ortungseinrichtungen, meist in Form einer Satellitennavigationseinrichtung (GNSS - Global Navigation Satellite System), aufweisen. Bei der Verwendung des mobilen Endgerätes wird seine aktuelle Position ermittelt und diese Position als Position des Schienenfahrzeugs verwendet, weil davon ausgegangen wird, dass sich das mobile Endgerät in dem Schienenfahrzeug befindet. Bei einem mobilen Endgerät kann selbstverständlich die interne Ortungseinrichtung verwendet werden. Alternativ kann aber auch eine externe Satellitennavigationseinrichtung (GNSS Ortungseinrichtung) verwendet werden, die auch außen am Schienenfahrzeug angebracht werden kann, weil hierdurch möglicherweise eine genauere Ortung möglich ist.

Anschließend wird erfindungsgemäß der Abstand zwischen der aktuellen Position des Schienenfahrzeugs und dem wenigstens einen Streckenelement mit Hilfe von digitalen Informationsdaten ermittelt. Die digitalen Informationsdaten umfassen wenigstens die Position des wenigstens einen Streckenelements. Selbstverständlich können die digitalen Informationsdaten weitere Informationen, insbesondere zu dem Streckenelement wie Art, ID, Richtung, Kilometrierung, etc. oder auch einen Verlauf der Fahrstrecke enthalten. Selbstverständlich können auch die Positionen von vielen oder allen Streckenelementen der eisenbahntechnischen Anlage enthalten sein. Als Abstand wird üblicherweise der Abstand entlang der Fahrstrecke des Schienenfahrzeugs verwendet, also der zurückzulegende Weg. Es kann aber auch der direkte Abstand verwendet werden, falls dies gegebenenfalls einfacher ist oder andere Gründe dafürsprechen.

Schließlich wird erfindungsgemäß wenigstens ein Signal ausgegeben, wenn der ermittelte Abstand zwischen der aktuellen Position und dem wenigstens einen Streckenelement einen vorbestimmten Grenzwert unterschreitet. Der vorbestimmte Grenzwert kann parametriert werden und dadurch beispielsweise an eine Geschwindigkeit des Schienenfahrzeugs und eine Zeit angepasst werden, die nötig ist, um das Schneeräummittel von einer unteren Position in eine obere Position zu bewegen. In der oberen Position ist das Schneeräummittel im Gegensatz zur unteren Position, die man auch als Räumposition bezeichnen könnte, angehoben, so dass eine Beschädigung des Streckenelements ausgeschlossen werden kann. Das ausgegebene Signal kann je nach Anwendungsfall unterschiedlich sein und beispielsweise elektrisch, mechanisch, akustisch oder visuell/optisch sein, wie im Folgenden noch genauer beschrieben wird. In jedem Fall kann das ausgegebene Signal ein Anheben des Schneeräummittels von der Räumposition in die Ruheposition direkt oder indirekt veranlassen.

Die erfindungsgemäße Lösung kann durch vorteilhafte Ausgestaltung weiterentwickelt werden, wie sie im Folgenden beschrieben sind.

So kann das Signal als akustisches und/oder visuelles/optisches Signal ausgegeben werden. Dies hat den Vorteil, dass das Signal für einen Fahrer oder Bediener des Schienenfahrzeugs sehr gut erkennbar ist, so dass dieser das Schneeräummittel anschließend von der unteren Position in die obere Position bewegen kann. Als optisches Signal kann im einfachsten Fall eine Signallampe verwendet werden oder ein Hinweis auf einem Display. Auf einem solchen Display können auch weitere detailliertere Informationen gegeben werden, wie beispielsweise auf welcher Seite das Streckenelement angeordnet ist, welche Art von Streckenelement näherkommt, etc. Zusätzlich oder alternativ kann ein akustisches Signal für den Bediener wahrnehmbar ausgegeben werden. Dies kann im einfachsten Fall ein Warnton sein oder auch sprachliche Hinweise mit detaillierten Informationen, ähnlich wie bei dem optischen/visuellen Signal.

In einer weiteren vorteilhaften Ausgestaltung kann das Schneeräummittel aufgrund des Signals automatisch von der unteren Position in die obere Position bewegt werden. Hierfür kann das Signal direkt an eine Fahrzeugsteuerung des Schienenfahrzeugs bzw. eine Steuerung des Schneeräummittels weitergegeben werden. Das Signal kann hier über eine geeignete Schnittstelle weitergegeben werden, die kabelgebunden oder auch kabellos, wie beispielsweise Bluetooth oder ähnliches ausgebildet sein kann. Eine kabellose Schnittstelle eignet sich besonders, wenn ein mobiles Endgerät verwendet wird. Die automatische Steuerung des Schneeräummittels in dieser Ausgestaltung hat den Vorteil, dass ein Bedienfehler eines Benutzers ausgeschlossen werden kann oder auch der Einsatz auf einem fahrerlosen Schienenfahrzeug möglich ist.

Ferner kann das Schneeräummittel automatisch auch von der oberen Position zurück in die untere Position bewegt werden, wenn der Abstand den vorbestimmten Grenzwert wieder überschreitet. Dies hat den Vorteil, dass das Schneeräummittel möglichst schnell wieder in die Räumposition bewegt wird und dadurch eine möglichst vollständige Schneeräumung der Fahrstrecke gewährleistet ist. Auch hierdurch wird ein fahrerloser Betrieb ermöglicht bzw. vereinfacht.

Um eine möglichst genaue Datenbasis zu bekommen und damit ein genaues Verfahren, können als digitale Informationsdaten zumindest teilweise BIM (Building Information Modelling) Daten verwendet werden. BIM Daten sind bei neuen eisenbahntechnischen Anlagen häufig bereits vorhanden und können dadurch ohne weiteren Aufwand für die Erfindung genutzt werden. BIM Daten sind in jedem Fall georeferenzierte Daten.

Um nach Veränderungen oder Erweiterung der eisenbahntechnischen Anlage die Daten möglichst schnell aktualisieren zu können, können die digitalen Informationsdaten online aktualisiert werden. Dies kann beispielsweise automatisch oder durch einen Benutzer gestartet geschehen, beispielsweise über eine mobile Internetverbindung.

In einer weiteren vorteilhaften Ausgestaltung können die digitalen Informationsdaten positionsabhängige Steuerungsinformationen für das Schneeräummittel umfassen, die für die Steuerung des Schneeräummittels verwendbar sind. Dies hat den Vorteil, dass dadurch das Schneeräumen optimiert werden kann, weil beispielsweise individuelle Steuerungsinformationen eingegeben werden können, die das Schneeräumen optimieren. Solche Steuerungsinformationen können derart sein, dass in bewohnten Gebieten der Schnee nicht Richtung der Wohnhäuer geräumt wird oder Straßen freigelassen werden oder ähnliches. Diese Steuerungsinformationen können auch nachträglich manuell hinzugefügt werden, um den Betrieb ständig zu optimieren.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind. Das Computerprogrammprodukt kann auch als eine App (Applikation) für ein mobiles Endgerät wie ein Smartphone oder Tablet ausgebildet sein.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein App-Store, ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das erfindungsgemäße Werkstück erzeugt.

Die Erfindung betrifft weiterhin ein mobiles Endgerät, insbesondere Smartphone, mit einer Software oder App, die zur Durchführung des erfindungsgemäßen Verfahrens einer der vorigen beschriebenen Ausführungsformen ausgestaltet sein kann, wobei beim Ermitteln der aktuellen Position des Schienenfahrzeugs eine aktuelle Position des Smartphones bzw. der externen Satellitennavigationseinrichtung ermittelt und diese als Position des Schienenfahrzeugs verwendet werden kann.

In einer vorteilhaften Ausgestaltung des erfindungsgemäßen Schienenfahrzeugs kann das Schienenfahrzeug zum Ausgeben des Signals als ein akustisches und/oder visuelles Signal ausgebildet sein. Dies hat den bereits oben beschriebenen Vorteil, dass dieses akustische und/oder visuelle Signal besonders gut für einen Bediener wahrnehmbar ist.

Ferner kann das Schienenfahrzeug ausgebildet sein, das Schneeräummittel aufgrund des Signals automatisch von einer unteren Position in eine obere Position zu bewegen. Weiterhin kann das Schienenfahrzeug ausgebildet sein, das Schneeräummittel automatisch von der oberen Position zurück in die untere Position zu bewegen, wenn der Abstand den vorbestimmten Grenzwert wieder überschreitet. Diese beiden Ausgestaltungen haben ebenfalls die oben bereits beschriebenen Vorteile, dass das Schneeräumen damit automatisiert und sogar auf einem fahrerlosen Schienenfahrzeug verwendet werden kann.

Schließlich betrifft die Erfindung auch noch ein Schienenfahrzeug, das wenigstens ein erfindungsgemäßes mobiles Endgerät umfasst.

Im Folgenden wird die Erfindung mit Bezug auf die beispielhafte Ausführungsform in den beigefügten Zeichnungen erläutert. Es zeigen:
- Fig. 1: eine schematische Darstellung eines erfindungsgemäßen Schienenfahrzeugs in einer beispielhaften Ausführungsform;
- Fig. 2: eine schematische Darstellung des Schienenfahrzeugs aus Fig. 1 in einer anderen Position;
- Fig. 3: eine schematische Darstellung eines erfindungsgemäßen mobilen Endgeräts in einer beispielshaften Ausführungsform;
- Fig. 4: eine schematische Darstellung eines erfindungsgemäßen Verfahrens in einer beispielhaften Ausführungsform.

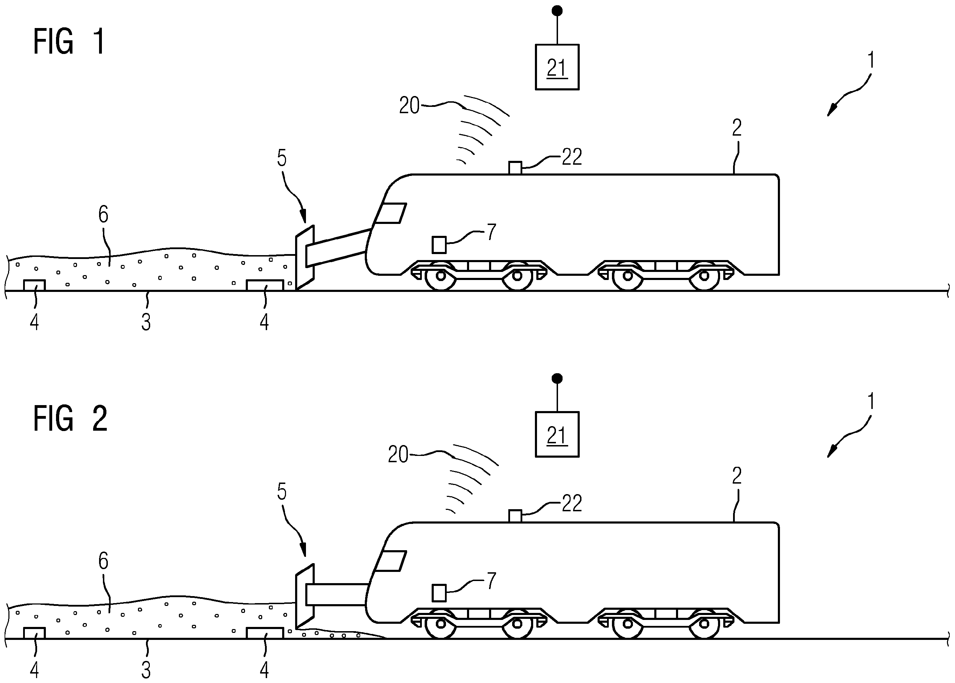

Im Folgenden wird die Erfindung mit Bezug auf die beispielhafte Ausführungsform in den Figuren 1-4 beschrieben.

In den Figuren 1 und 2 ist ein Teil einer eisenbahntechnischen Anlage 1 gezeigt, die ein Schienenfahrzeug 2, eine Fahrstrecke 3 und Streckenelemente 4 umfasst.

Das Schienenfahrzeug 2 ist in den Figuren lediglich schematisch dargestellt und kann jegliche Art von Schienenfahrzeug sein, wie beispielsweise eine Lokomotive, ein Zug, eine Straßenbahn oder eine Regionalbahn. Es kann aber auch jegliche Form von Fahrzeug sein, die für ein Fahren entlang der Fahrstrecke 3 der eisenbahntechnischen Anlage 1 ausgebildet ist, wie z.B. ein Radlader mit Schienenachse, sogenannte Zwei-Wege-Fahrzeuge.

Die Fahrstrecke 3 ist eine übliche Gleisanlage aus Schienen, wie sie im Eisenbahnverkehr üblich ist. Entlang der Fahrstrecke 3 sind die Streckenelemente 4 in üblicher Weise angeordnet. Streckenelemente 4 können hierbei beispielsweise Balisen, Achszähler, Weichenantriebe oder aber auch Markierungstafeln sein, die an der Fahrstrecke 3 angeordnet sind.

Das Schienenfahrzeug 2 weist wenigstens ein Schneeräummittel 5 an der Vorderseite auf, mit dem auf der Fahrstrecke 3 befindlicher Schnee 6 weggeräumt werden kann. Das Schneeräummittel 5 ist beispielsweise ein Schneepflug, eine Schneefräse oder ein Schneeschild, mit dem der Schnee 6 während der Fahrt des Schienenfahrzeugs 2 von der Fahrstrecke 3 geräumt werden kann. Das Schneeräummittel 5 an dem Schienenfahrzeug 2 kann in wenigstens zwei Positionen bewegt werden. In Figur 1 ist das Schneeräummittel 5 in einer unteren Position und in Figur 2 in einer oberen Position dargestellt. In der in Figur 1 dargestellten unteren Position steht das Schneeräummittel relativ zur Fahrstrecke 3 so tief, dass die Streckenelemente 4 beim Passieren beschädigt werden oder werden könnten. In der in Figur 2 dargestellten oberen Position des Schneeräummittels 5 ist ein Abstand zur Fahrstrecke 3 gegenüber der unteren Position so vergrößert, dass gewährleistet ist, dass bei einem Passieren der Streckenelemente 4 diese nicht von dem Schneeräummittel 5 beschädigt werden. Das Schneeräummittel 5 umfasst einen nicht dargestellten Antrieb, durch den es von der oberen Position in die untere Position und umgekehrt bewegt werden kann, wobei dieser Positionswechsel sowohl im Stillstand als auch während der Fahrt des Schienenfahrzeugs 2 geschehen kann. Selbstverständlich sind auch weitere obere Positionen des Schneeräummittels 5 möglich. Denkbar wären beispielsweise individuelle obere Positionen für unterschiedliche Arten von Streckenelementen 4, die jeweils eine Beschädigung des jeweiligen Streckenelementes 4 verhindern und dennoch eine Schneeentfernung oberhalb des Streckenelements 4 gewährleisten. Im Folgenden wird aber die einfachste Ausführungsform beschrieben, in der nur eine obere Position und eine untere Position existieren.

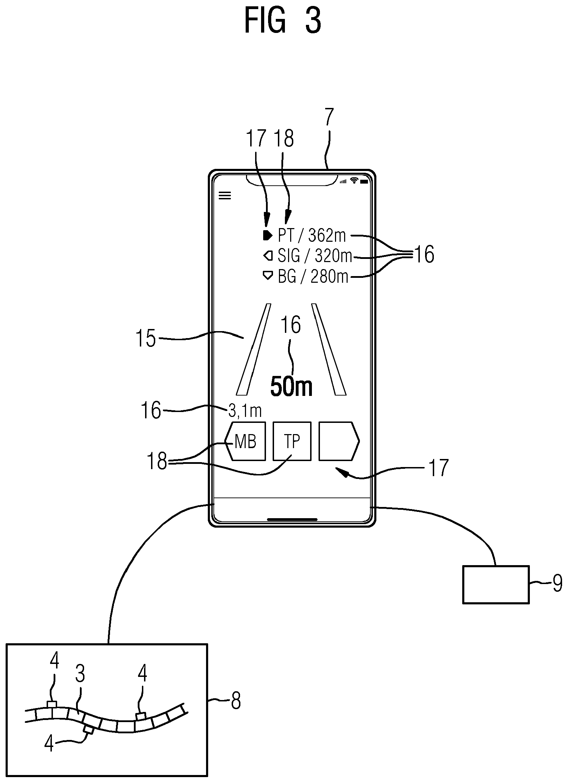

Das Schienenfahrzeug 2 weist ferner ein mobiles Endgerät 7 auf, das im Detail in Figur 3 dargestellt ist. Bei der beispielhaften Ausführungsform in den Figuren ist das mobile Endgerät 7 als ein Smartphone ausgebildet. Alternativ kann es auch als ein Tablet oder ein anderer mobiler Computer ausgebildet sein. Weiterhin alternativ können die im Folgenden beschriebenen Funktionen des mobilen Endgerätes 7 auch in andere Teile des Schienenfahrzeugs 2 wie beispielsweise der Fahrzeugsteuerung integriert sein.

Das mobile Endgerät 7 umfasst einen Speicher, in dem digitale Informationsdaten 8 abgelegt sind. Die digitalen Informationsdaten 8 umfassen genaue Positionsdaten für die Streckenelemente 4 als auch Positionsdaten bzw. Koordinaten zum Verlauf der Fahrstrecke 3, wie z. B. den Verlauf der Gleismitten. Die digitalen Informationsdaten 8 können aber auch weitere Attribute der Streckenelemente 4 enthalten wie beispielsweise Typ, Richtung, Kilometrierung, Identifikationsnummer, Höhe, etc. Vorteilhafterweise können sogenannte BIM (Building Information Modelling) Daten verwendet werden, die diese Informationen bereits alle enthalten und bei der Planung und Erstellung einer modernen eisenbahntechnischen Anlage vorhanden sind. Dies hat den Vorteil, dass die nötigen digitalen Informationsdaten 8 für die Erfindung nicht extra ermittelt werden müssen. In jedem Fall sollten georeferenzierte Daten verwendet werden. In Figur 3 sind diese digitalen Informationsdaten 8 lediglich schematisch dargestellt.

Das mobile Endgerät 7 weist weiterhin eine interne Ortungseinrichtung 9 auf, mit der eine aktuelle Position ermittelt werden kann. Eine solche Ortungseinrichtung 9 ist bei mobilen Endgeräten 7 allgemein üblich und häufig als Satellitennavigationseinrichtung (GNSS) ausgebildet. Da der Satellitenempfang innerhalb des Schienenfahrzeugs 7 aber möglicherweise schlecht ist und dadurch die Ortung ungenau werden kann, umfasst das Schienenfahrzeug 2 eine externe Satellitennavigationseinrichtung 22 (GNSS Einrichtung). Diese ist per WLAN mit dem mobilen Endgerät 7 verbunden. Bei der Ausführungsform in den Figuren handelt es sich um eine akkubetriebene Satellitennavigationseinrichtung 22, die nicht zur normalen Ausstattung des Schienenfahrzeuges 2 gehört und für den Betrieb temporär und reversible an- und abgebaut werden kann. Dies hat den Vorteil, dass sie nur im Winter beim Einsatz zum Schneeräumen installiert werden kann.

Weiterhin kann das mobile Endgerät 7 für eine Signalübertragung mit einer nicht dargestellten Fahrzeugsteuerung des Schienenfahrzeugs 2 oder auch mit einer separaten Steuerung des Schneeräummittels 5 verbunden sein. Diese Verbindung kann kabelbasiert oder auch kabellos, wie z. B. per Bluetooth oder WLAN, realisiert werden.

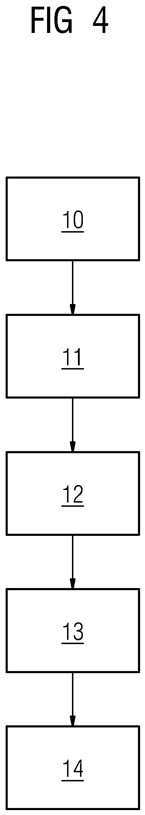

Im Folgenden wird eine beispielhafte Ausführungsform des erfindungsgemäßen Verfahrens zum Schneeräumen mit Hilfe des Schienenfahrzeugs 2 beschrieben. Die Verfahrensschritte sind dabei schematisch in Figur 4 dargestellt.

In einem ersten Verfahrensschritt 10 fährt das Schienenfahrzeug 2 in üblicher Weise entlang der Fahrstrecke 3 mit dem Schneeräummittel 5 in der unteren Position und räumt den Schnee 6 fort. Das mobile Endgerät 7 ermittelt kontinuierlich seine aktuelle Position, wobei die durch das mobile Endgerät 7 ermittelte Position als aktuelle Position des Schienenfahrzeugs angenommen wird.

Da für das erfindungsgemäße Verfahren insbesondere die Position am vorderen Ende des Schneeräummittels 5 von Interesse ist, kann hierfür gegebenenfalls ein Offset berücksichtigt werden, da ein Positionsunterschied zwischen dem mobilen Endgerät 7 und der Spitze des Schneeräummittels 5 konstant ist. Hierdurch kann die Genauigkeit erhöht werden.

Weiterhin wird kontinuierlich ein Abstand zwischen der aktuellen Position und den Streckenelementen 4 ermittelt. Die durch das mobile Endgerät 7 ermittelte Position und die Positionsangaben in den digitalen Informationsdaten 8 liegen dem gleichen Bezugssystem, wie z. B. einem globalen Koordinatensystem, zugrunde, so dass eine einfache Abstandsberechnung innerhalb des mobilen Endgeräts 7 möglich ist. Das Ermitteln des Abstands bzw. der Abstände erfolgt im Verfahrensschritt 11.

Sobald einer der ermittelten Abstände unterhalb eines vorbestimmten Grenzwertes liegt, wird im Verfahrensschritt 12 ein Signal 15 ausgegeben. Dieses Signal 15 ist bei der beispielhaften Ausführungsform in den Figuren als ein optisches Signal auf einem Display des mobilen Endgerätes 7 dargestellt. Dies kann im einfachsten Fall ein Farbwechsel oder ähnliches sein. Das Signal 15 kann beispielsweise bewirken, dass eine Farbdarstellung auf dem Display des mobilen Endgerätes 7, beispielsweise wie bei einer Ampel von Grün nach Rot, wechselt, um einem Fahrer anzuzeigen, dass das Schneeräummittel 5 in die obere Position bewegt werden muss.

Das Signal 15 umfasst bei der beispielhaften Ausführungsform in Figur 3 weiterhin eine Entfernungsangabe 16, eine Richtungsangabe 17 und eine Typangabe 18. Die Angaben auf dem Display in der beispielhaften Ausführungsform in Figur 3 bedeuten im Einzelnen: Die Entfernungsangabe 16 umfasst eine Entfernung in Metern, wann das Schneeräummittel 5 angehoben werden muss. Die Richtungsangaben 17 umfassen einzelne Anzeigen für Links, Mitte, Rechts, z.B. durch Pfeilsymbole, durch die angezeigt wird, auf welcher Seite das nächste Streckenelement 4 in der Fahrstrecke 3 angeordnet ist. Die Typangabe 18 enthält in dieser beispielhaften Ausführungsform einen zweistelligen Buchstabencode, durch den der Typ des Streckenelementes 4 angegeben ist. MB steht in Figur 3 beispielsweise für eine sich nähernde Markierungstafel und TP für einen Achszähler. Zusätzlich werden bei der Ausführungsform in Figur 3 in einem oberen Displayabschnitt weitere Angaben zu weiter entfernten Streckenelementen 4 gegeben.

In einem stärker automatisierten Fahrbetrieb sind weitere optionale Verfahrensschritte möglich. So kann beispielsweise in einem optionalen Verfahrensschritt 13 das Schneeräummittel 5 automatisch in die obere Position bewegt werden und in einem ebenfalls optionalen Schritt 14 das Schneeräummittel 5 zurück in die untere Position bewegt werden, wenn das entsprechende Streckenelement 4 passiert wurde.

Die digitalen Informationsdaten 8 können durch das mobile Endgerät 7 in regelmäßigen Abständen oder auch kontinuierlich online aktualisiert werden. Dazu baut das mobile Endgerät 7 in üblicher Weise eine mobile Datenverbindung 20 zu einer Funkstation 21 auf, die wiederum eine Datenverbindung zu einem nicht dargestellten Server aufbaut. Von dem Server werden aktualisierte digitale Informationsdaten 8 an das mobile Endgerät 7 übermittelt, das diese in seinem Speicher aktualisiert.

Ein zu der Erfindung ähnliches Verfahren könnte auch für andere Arbeiten mit schweren Maschinen und Spezialfahrzeugen an der Fahrstrecke der eisenbahntechnischen Anlage eingesetzt werden, wie beispielsweise für ein Stopfen des Gleisbetts oder ähnliches.

In den Figuren ist das Schneeräummittel 5 einteilig dargestellt. Es kann aber z.B. auch mehrere Schneeschilder umfassen, die zum Räumen der unterschiedlichen Bereiche der Fahrstrecke 3 ausgebildet sind, wie z.B. rechts, links und in der Mitte. Diese können separat gesteuert und separat von der unteren in die obere Position bewegt werden, wenn bekannt ist, in welchem Bereich sich ein Streckenelement 4 befindet.

## Patentansprüche

1. Verfahren zum Schneeräumen entlang einer Fahrstrecke (3) einer eisenbahntechnischen Anlage (1) mittels eines Schienenfahrzeugs (2), das wenigstens ein Schneeräummittel (5) umfasst, wobei wenigstens ein Streckenelement (4), insbesondere eine Balise, ein Achszähler oder ein Weichenantrieb, an der Fahrstrecke (3) angeordnet ist und wobei das Verfahren die folgenden Schritte umfasst:
- Ermitteln einer aktuellen Position des Schienenfahrzeugs (2),
- Ermitteln eines Abstands zwischen der aktuellen Position des Schienenfahrzeugs (2) und dem wenigstens einen Streckenelement (4) mit Hilfe von digitalen Informationsdaten, die wenigstens eine Position des Streckenelements (4) umfassen,
- Ausgeben wenigstens eines Signals (15), wenn der Abstand wenigstens einen vorbestimmten Grenzwert unterschreitet.

2. Verfahren nach Anspruch 1,
**dadurch gekennzeichnet, dass** das Signal (15) als akustisches und/oder visuelles Signal ausgegeben wird.

3. Verfahren nach Anspruch 1 oder 2,
**dadurch gekennzeichnet, dass** das Schneeräummittel (5) aufgrund des Signals (15) automatisch von einer unteren Position in eine obere Position bewegt wird.

4. Verfahren nach Anspruch 3,
**dadurch gekennzeichnet, dass** das Schneeräummittel (5) automatisch von der oberen Position zurück in die untere Position bewegt wird, wenn der Abstand den vorbestimmten Grenzwert wieder überschreitet.

5. Verfahren nach einem der oben genannten Ansprüche,
**dadurch gekennzeichnet, dass** als digitale Informationsdaten (8) zumindest teilweise BIM (Building Information Modelling) Daten verwendet werden.

6. Verfahren nach einem der oben genannten Ansprüche,
**dadurch gekennzeichnet, dass** die digitalen Informationsdaten (8) online aktualisiert werden.

7. Verfahren nach einem der oben genannten Ansprüche,
**dadurch gekennzeichnet, dass** die digitalen Informationsdaten (8) positionsabhängige Steuerungsinformationen für das Schneeräummittel (5) umfassen, die für die Steuerung des Schneeräummittels (5) verwendbar sind.

8. Computerprogrammprodukt, insbesondere eine App für ein mobiles Endgerät (7), mit Programmbefehlen zur Durchführung des Verfahrens nach einem der Ansprüche 1 bis 7.

9. Bereitstellungsvorrichtung für das Computerprogrammprodukt nach Anspruch 8, wobei die Bereitstellungsvorrichtung das Computerprogrammprodukt speichert und/oder bereitstellt.

10. Mobiles Endgerät (7), insbesondere Smartphone, mit einer Software oder App, die zur Durchführung des Verfahrens nach einem der Ansprüche 1 bis 7 ausgestaltet ist, wobei beim Ermitteln der aktuellen Position des Schienenfahrzeugs (2) eine aktuelle Position des Smartphones ermittelt wird und diese als Position des Schienenfahrzeugs (2) verwendet wird.

11. Schienenfahrzeug (2) mit wenigstens einem Schneeräummittel (5), wobei das Schienenfahrzeug (2) zum Schneeräumen mittels des Schneeräummittels (5) entlang einer Fahrstrecke (3) einer eisenbahntechnischen Anlage (1) ausgebildet ist, wobei wenigstens ein Streckenelement (4), insbesondere eine Balise, ein Achszähler oder ein Weichenantrieb, an der Fahrstrecke (3) angeordnet ist, und das Schienenfahrzeug (2) ferner ausgebildet ist,
eine aktuelle Position des Schienenfahrzeugs (2) zu ermitteln,
einen Abstand zwischen der aktuellen Position des Schienenfahrzeugs (2) und dem wenigstens einen Streckenelement (4) mit Hilfe von digitalen Informationsdaten (8), die wenigstens eine Position des Streckenelements (4) umfassen, zu ermitteln, und
wenigstens ein Signal (15) auszugeben, wenn der Abstand wenigstens einen vorbestimmten Grenzwert unterschreitet.

12. Schienenfahrzeug (2) nach Anspruch 11,
**dadurch gekennzeichnet, dass** das Schienenfahrzeug (2) zum Ausgeben des Signals (15) als ein akustisches und/oder visuelles Signal ausgebildet ist.

13. Schienenfahrzeug (2) nach Anspruch 11 oder 12,
**dadurch gekennzeichnet, dass** das Schienenfahrzeug (2) ausgebildet ist, das Schneeräummittel (5) aufgrund des Signals (15) automatisch von einer unteren Position in eine obere Position zu bewegen.

14. Schienenfahrzeug (2) nach einem der Ansprüche 11 bis 13, **dadurch gekennzeichnet, dass** das Schienenfahrzeug (2) ausgebildet ist, das Schneeräummittel (5) automatisch von der obere Position zurück in die untere Position zu bewegen, wenn der Abstand den vorbestimmten Grenzwert wieder überschreitet.

15. Schienenfahrzeug (2) nach einem der Ansprüche 11 bis 14, **dadurch gekennzeichnet, dass** das Schienenfahrzeug (2) wenigstens ein mobiles Endgerät (7) nach Anspruch 10 umfasst.
